# EUROPEAN PATENT APPLICATION

(11) **EP 4 764 926 A1**
(43) Date of publication of application: **24.06.2026**
(21) Application number: 24220756.1
(22) Date of filing: 17.12.2024
(51) Int. Cl.: G06F 21/62, G06F 21/64, H04L 9/32, H04L 9/00

(54) **MANAGING NON-FUNGIBLE TOKENS ON A DISTRIBUTED LEDGER**

(71) Applicant: Arcual AG, 8050 Zürich (CH)
(72) Inventor: ESMELA BENITEZ, Rodrigo Martin, 6300 Zug (CH); ERICKSON, Andrew Hayden, 8708 Männedorf (CH)
(74) Representative: E. Blum & Co. AG

(57) **Abstract**

An aspect of the invention relates to a computer-implemented method for managing the ownership of an asset. The method comprises providing a smart registry contract (10) on a distributed ledger (110, 210, 310) and minting, by the smart registry contract (10), a non-fungible token (11) as ownership token for the asset and an associated token-bound account (12) on the distributed ledger (110, 210, 310). The method further comprises providing a permissioned storage system (20) and an application layer (30). Further steps include receiving, by the application layer, the metadata of the asset including a document (21) associated to the asset, storing the document (21) in the permissioned storage system (20) and recording a link (22) to the document (21) in the associated token-bound account (12).

Further aspects relate to a digital asset management system and a corresponding computer program product.

## Description

### Technical Field

The present invention pertains to a computer-implemented method for managing the ownership of an asset, in particular a physical or a digital asset.

Further aspects relate to a distributed ledger and a corresponding computer program product.

### Background Art

Well-known types of real-world assets, such as luxury goods, artworks, antiques, collectibles and real estate, require strict record-keeping and secure storage of associated documents, certificates, and contracts. Managing these documents individually can be cumbersome and prone to errors or fraud.

One approach to record and manage data of assets is the distributed ledger technology (DLT). A distributed ledger is a distributed digital system for recording asset transactions. In such a system the asset transactions and their details are recorded in several places simultaneously.

Such digital ledger may be in particular implemented by distributed networks comprising a plurality of nodes which are arranged in a distributed fashion. In distributed networks computing, software and data are spread out across the plurality of nodes. The nodes establish computing resources and the distributed networks may use distributed computing techniques.

An example of distributed networks are blockchain networks. Blockchain networks are consensus-based, electronic ledgers based on blocks. Each block comprises transactions and other information. Furthermore, each block contains a hash of the previous block so that blocks become chained together to create a permanent, unalterable record of all transactions which have been written to the blockchain. Transactions may call small programs known e.g. as smart contracts.

In order for a transaction to be written to the blockchain, it must be "validated" and agreed upon by the network. In other words, the network nodes have to reach consensus on blocks to be written to the blockchain. Such consensus may be achieved by various consensus protocols.

In one type of blockchain network, consensus is achieved by using a proof-of-work algorithm. Another type of consensus protocol is based on a proof-of-stake algorithm.

In today's rapidly evolving digital landscape, there is an arising need for secure and transparent methods of recording ownership, provenance, and relevant documentation of real-world assets.

### Disclosure of the Invention

Accordingly, one object of an aspect of the invention is to provide an advanced method for managing the ownership of an asset, in particular a physical or a digital asset.

According to an embodiment of a first aspect of the invention, there is provided a computer-implemented method for managing the ownership of an asset, in particular a physical or a digital asset. The method comprises providing a smart registry contract on a distributed ledger. The smart registry contract is configured to provide a minting functionality. A further step includes minting, by the smart registry contract, a non-fungible token as ownership token for the asset and an associated token-bound account on the distributed ledger. The associated token-bound account is securely and immutable bound to the associated non-fungible token and being configured to provide a digital folder for metadata of the asset. Further steps include providing a permissioned storage system and providing an application layer comprising a user interface and a machine-to-machine interface to the smart registry contract of the distributed ledger and the permissioned storage system. A further step includes receiving, by the application layer, the metadata of the asset. The metadata encompasses a document associated with the asset. Further steps include storing, via the application layer, the document in the permissioned storage system and recording, via the application layer and the smart registry contract, a corresponding link to the document in the associated token-bound account.

Such an embodied method provides an advantageous technical solution for recording ownership, provenance and relevant documentation of assets.

More particularly, embodiments of the invention allow to bundle all relevant documents of the asset into a single, tokenized digital folder provided by the token-bound account and the linked documents in the permissioned storage system. This digital folder may encapsulate every aspect of the asset, including ownership records, transfer history, certifications, and legal documents, in a secure and immutable format.

The token-bound account records in particular a plurality of key-value pairs of the metadata. Such key-value pairs need only limited storage capacity and can hence be efficiently recorded in the token-bound account of the distributed ledger. Documents of the metadata such as certificates of originality, contracts, maintenance records and other documents often require significant storage capacity. Such documents can hence be stored according to embodiments of the invention in the permissioned storage system, while only the link to the document is recorded in the token-bound account of the distributed ledger. This ensures seamless access to the documents while maintaining integrity and privacy of the stored data.

By tokenizing the metadata including documents as part of a single token, embodiments of the invention may ensure a streamlined, efficient, and tamper-proof solution for record-keeping. Embodiments of the invention enhance transparency and simplify the management of assets by providing an all-encompassing single record of everything related to the asset.

According to embodiments, the permissioned storage system may be in particular implemented as a decentralized storage network using InterPlanetary File System (IPFS) or Arweave (ArFS). It may be designed to serve as the secure persistence layer for all digitized documents associated with tokenized assets. According to embodiments it is capable of storing documents in any format and of any size.

According to embodiments, the storage location of the document is only referenced as a link in the token-bound ledger. More particularly, there is no global index of documents so that the documents remain private and are only referenced in the corresponding token-bound account.

According to embodiments, the link to the document may be in particular recorded as the value of a key-value pair in the token-bound account.

According to an embodiment, the distributed ledger comprises a public blockchain and a permissioned blockchain. According to such an embodiment the method comprises minting the non-fungible token on the public blockchain and minting the token-bound account on the permissioned blockchain.

Such an embodiment provides the advantage that it combines the ability to utilize the advantages of a public blockchain for token creation and ownership, while providing the security, privacy and advanced digital portfolio management capabilities of a permissioned blockchain.

According to an embodiment, the distributed ledger comprises a permissioned blockchain and the method comprises minting the non-fungible token and minting the associated token-bound account on the permissioned blockchain.

According to this embodiment, all asset-related processes, including token minting and minting of the associated token-bound account as well as the storage of documents can be performed within a secure ecosystem. Such an embodiment hence provides advantages in terms of privacy and confidentiality.

According to an embodiment, the distributed ledger comprises a public blockchain and the method comprises minting the non-fungible token and minting the associated token-bound account on the public blockchain.

According to such an embodiment, the non-fungible token(s), the smart registry contract and the token-bound accounts reside on a public blockchain, in particular an Ethereum Virtual Machine (EVM) based blockchain. Nevertheless, to maintain document privacy, documents are stored on the permissioned storage system.

Using a public blockchain is in particular advantageous for use-cases where transparency and interoperability are important. Both the non-fungible token, e.g. an ERC-721 token, and its associated token-bound account can be minted and managed on a public blockchain, e.g. the EVM-based blockchain, while the permissioned storage system ensures the secure storage of sensitive documents and metadata.

This approach allows users to leverage the advantages of public chain decentralization and self-custody while safeguarding and offering privacy of critical data within the permissioned storage system.

The combination of public blockchain management and permissioned document storage provides a solution offering both transparency and enhanced security and privacy for digital asset management in a cross-chain environment.

According to an embodiment, the smart registry contract is a contract according to the Ethereum Request for Comments (ERC) 6551 standard and the non-fungible token is a token according to the ERC-721-standard.

This provides an efficient implementation of embodiments of the invention on the Ethereum network.

According to embodiments, the smart registry contract is configured to prevent external calls to the execute-function of the Ethereum Request for Comments (ERC)-6551 standard. Hence execute calls must originate from internal smart contract-defined functions only. This further enhances the security.

According to embodiments, the smart registry contract is configured to provide a delegate-transfer function configured to delegate transfer of ownership rights to the application layer.

This allows the application layer to transfer the non-fungible token and its token-bound account on behalf of the current owner(seller) without any further interaction from the seller. This facilitates an efficient management and execution of transfer by the application layer without compromising security for the owner, i.e. introducing unnecessary third-party risk by requiring complete transfer of ownership seen in typical NFT marketplaces.

According to an embodiment of another aspect of the invention, a digital asset management system is provided. The digital asset management system comprises a distributed ledger, a permissioned storage system and an application layer. The application layer is configured to provide a user interface and a machine-to-machine interface to the distributed ledger and the permissioned storage system. The distributed ledger is configured to perform steps of a computer-implemented method for managing the ownership of an asset, in particular a physical or a digital asset, according to the method aspects of the invention, in particular the steps of
providing a smart registry contract on a distributed ledger, the smart registry contract being configured to provide a minting functionality;
minting, by the smart registry contract, a non-fungible token as ownership token for the asset and an associated token-bound account on the distributed ledger, the associated token-bound account being securely and immutable bound to the associated non-fungible token and being configured to provide a digital folder for metadata of the asset;
receiving, by the application layer, metadata of the asset, the metadata encompassing a document associated to the asset;
storing, via the application layer, the document in the permissioned storage system; and
recording, via the application layer and the smart registry contract, a corresponding link to the document in the associated token-bound account.

According to an embodiment of another aspect of the invention, a computer program product for performing a computer-implemented method for managing the ownership of an asset, in particular a physical or a digital asset, on a digital asset management system is provided. The computer program product comprises a computer readable storage medium having program instructions embodied therewith, the program instructions executable by the distributed ledger to cause the distributed ledger to perform a method comprising steps of the method aspect of the invention, in particular the steps of
providing a smart registry contract on a distributed ledger, the smart registry contract being configured to provide a minting functionality;
minting, by the smart registry contract, a non-fungible token as ownership token for the asset and an associated token-bound account on the distributed ledger, the associated token-bound account being securely and immutable bound to the associated non-fungible token and being configured to provide a digital folder for metadata of the asset;
receiving, by the application layer, metadata of the asset, the metadata encompassing a document associated to the asset;
storing, via the application layer, the document in the permissioned storage system; and
recording, via the application layer and the smart registry contract, a corresponding link to the document in the associated token-bound account.

Features and advantages of one aspect of the invention may be applied to the other aspects of the invention as appropriate.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
FIG. 1 shows an exemplary block diagram of a digital asset management system according to an embodiment of the invention comprising a public blockchain only;
FIG. 2 shows an exemplary block diagram of another digital asset management system according to an embodiment of the invention comprising a public blockchain and a permissioned blockchain;
FIG. 3 shows an exemplary block diagram of another digital asset management system according to an embodiment of the invention comprising a permissioned blockchain only;
FIG. 4 shows an exemplary diagram of a distributed ledger comprising a plurality of nodes according to an embodiment of the invention;
FIG. 5 shows an exemplary embodiment of a node of a distributed ledger according to an embodiment of the invention;
FIG. 6a shows a flow chart of initial method steps of a computer-implemented method for managing the ownership of an asset;
FIG. 6b shows a flow chart of further method steps of a computer-implemented method for managing the ownership of an asset;
FIG. 7a shows a flow chart of method steps of a computer-implemented method for managing the ownership of an asset, in particular an initialization of a transaction;
FIG. 7b shows a flow chart of method steps of a computer-implemented method for managing the ownership of an asset, in particular a successful completion of a transaction;
FIG. 7c shows a flow chart of method steps of a computer-implemented method for managing the ownership of an asset, in particular an unsuccessful transaction.
   and
FIG. 8 shows an exemplary embodiment of a node of a distributed ledger according to an embodiment of the invention.

### Modes for Carrying Out the Invention

At first, some general aspects and terms of embodiments of the invention will be introduced.

Distributed ledger: A distributed ledger comprises a plurality of nodes that are arranged in a distributed fashion. In such a distributed ledger computing, software and data is distributed across the plurality of nodes. The nodes establish computing resources and the distributed ledger may use in particular distributed computing techniques. The distributed ledger may be implemented in particular as a distributed network. According to embodiments, distributed ledgers may be embodied as blockchain networks.

Asset: An asset may be a physical or a digital asset. Assets according to embodiments of the invention include luxury goods, artworks, antiques, collectibles, real estate and many more.

Smart contract: A smart contract is a computer program that is deployed on a distributed ledger, in particular a blockchain, and configured to automatically execute one or more transactions or functions when predefined conditions are met.

Smart registry contract: A smart registry contract is generally a smart contract deployed as a singleton contract for registering and managing other smart contracts, in particular non-fungible tokens and associated token-bound accounts. According to embodiments the smart registry contract may be in particular embodied as ERC-6551 Registry contract according to the Ethereum standard ERC 6551. According to embodiments, the smart registry contract comprises a "createAccount" function to provide a minting functionality for minting a non-fungible token and an associated token-bound account on a distributed ledger.

Singleton/singleton pattern: A singleton pattern is generally a software design pattern that ensures that a class has only one instance and provides a global point of access to that instance. A smart contract that has been created as a singleton guarantees that only one instance of the smart contract can ever be deployed on the blockchain. Hence a smart contract that is embodied as singleton has only one instance per blockchain, but there is global access to this instance available for all users of the blockchain.

Token: Generally, a digital asset stored on a distributed ledger. A token may be implemented as a smart contract.

Non-fungible token: A non-fungible token (NFT) is a unique digital identifier that is recorded on a distributed ledger. The ownership of a NFT is also recorded on the distributed ledger and can be transferred by the owner of the NFT. Non-fungible tokens are in particular tokens that are issued in connection with real-world assets such as paintings, sculptures, installations , luxury goods like jewelry and watches as well as others. A non-fungible token may be in particular a token according to the ERC 721-standard of the Ethereum network. ERC-721 is a widely used Ethereum standard for non-fungible tokens. It associates a unique number with an Ethereum address, thereby denoting that address owns the unique number, i.e. the NFT.

Ownership token: A token that is configured to certify ownership of an asset.

Token-bound account: An account of a distributed ledger which is securely and immutably bound to a token, in particular a non-fungible token. The token bound accounts allow the corresponding tokens to have their own smart contract accounts. Accordingly, non-fungible tokens (NFTs) can interact with other smart contracts. Token-bound accounts according to embodiments may be implemented in particular by the ERC-6551 standard. A token-bound account may serve as a wallet for the non-fungible token. To initiate any operation within a token-bound account requires the owner of the non-fungible token to trigger a transaction. The extent of an account's capabilities is determined by the implementation logic. Token-bound accounts are created together with the non-fungible token through the smart registry contract. The secure and immutable binding between the non-fungible token and the token-bound account is established by minting the non-fungible-token and the associated token-bound account on the distributed ledger. According to embodiments there is a one-to-one link between the non-fungible-token and the associated token-bound account. According to embodiments, a token-bound account may also be denoted as a token-based account.

Minting: Generally minting refers to generating new cryptocurrency coins, tokens or smart contracts and recording them on a distributed ledger. Minting a non-fungible token involves the creation of a smart contract on a distributed ledger configured to issue a digital certificate of ownership for an asset. According to embodiments, the minting of non-fungible tokens may be performed in particular by the smart registry contract and may create in an atomic manner the non-fungible token and an associated token-bound account for the non-fungible token. The minting assigns a unique identifier to the non-fungible token that distinguishes it from all other tokens on the distributed ledger. This identifier is recorded on the distributed ledger.

Blockchain: The term blockchain shall include all forms of electronic, computer- based, distributed ledgers. A blockchain is in particular a distributed ledger with a list of records denoted as blocks that are securely linked together via cryptographic hashes. The records are stored across a distributed network of nodes. Each block comprises transactions and other information. Furthermore, each block contains a hash of the previous block so that blocks become chained together to create a permanent, unalterable record of all transactions which have been written to the blockchain. Transactions may call small programs denoted as smart contracts.

Public blockchain: A public blockchains is a distributed ledger anyone can join and access without permission and anyone may possess a copy of the ledger.

Permissioned blockchain: A permissioned blockchain is a distributed ledger that is not publicly accessible. It can only be accessed by users with permission. Users are required to identify themselves through certificates or other digital means. In the figures a permissioned blockchain is illustrated with a dotted background pattern.

Permissioned storage system: A permissioned storage system is a system for storing information, in particular documents associated with a non-fungible token, that is not publicly accessible. The stored information can only be accessed by users with permission. Users are required to identify themselves through certificates or other digital means. In the figures a permissioned storage system is illustrated with a dotted background pattern.

Application Layer: A layer running on an underlying software platform which is configured to interact with the distributed ledger, the permissioned storage system and the underlying blockchain and tokenization protocols to provide a user-friendly interface while ensuring the secure and efficient operation of the digital asset management system.

Digital asset management system: A system configured to manage the ownership of assets by means of non-fungible tokens.

Digital folder: One or more places of a digital asset management system where metadata of a non-fungible token can be recorded that represents the ownership, provenance, and detailed documentation of an asset. The digital folder may include all critical data associated with the asset, such as certificates, contracts, maintenance records, and more, providing a comprehensive, immutable, and easily accessible record. The digital folder may encompass a non-fungible token, an associated token-bound account and documents linked to the token-bound account and stored on a permissioned storage system. The digital asset management system is designed to facilitate the secure transfer and management of ownership of the non-fungible token while preserving the integrity and value of the asset it represents.

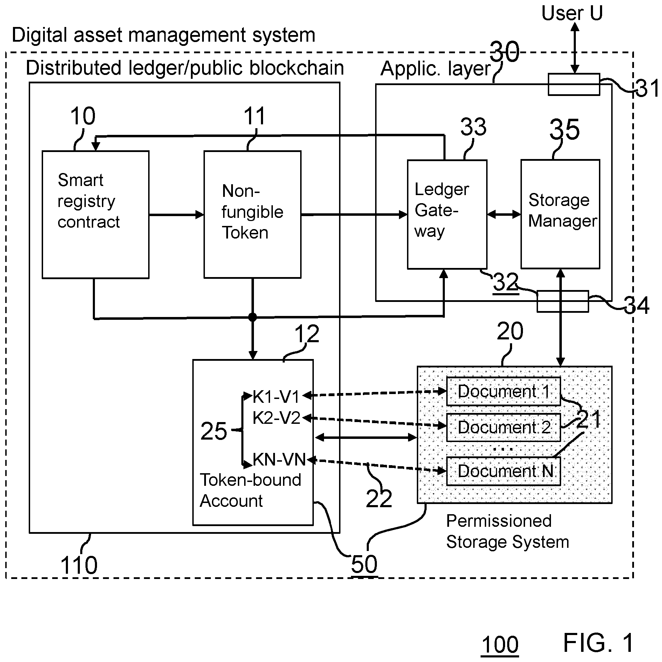

FIG. 1 shows a digital asset management system 100 according to an embodiment of the invention. The digital asset management system 100 comprises a distributed ledger 110, a permissioned storage system 20 and an application layer 30. The application layer 30 provides a user interface 31 and a machine-to-machine interface 32. The permissioned storage system is configured to store documents 21. The machine-to-machine interface 32 encompasses a machine-to-machine interface 33 to the distributed ledger, also denoted as ledger gateway, and a machine-to-machine interface 34 to the permissioned storage system 20. The application layer 30 further comprises a storage manager 35 for managing the access to the permissioned storage system 20 via the machine-to-machine interface 34, also denoted as storage interface 34. The application layer 30 may comprise in particular a web-based API and may be configured to implement further features and enhancements, such as fraud prevention mechanisms, user authentication, and transaction management. The application layer 30 may run on an underlying software platform.
The digital asset management system 100 is configured to perform a computer-implemented method for managing the ownership of assets, in particular physical or digital assets.

On the distributed ledger 110 a smart registry contract 10 is provided or in other words created. The smart registry contract 10 is embodied or in other words created as a singleton or single instance. The smart registry contract 10 provides a minting functionality for minting non-fungible tokens 11 and associated token-bound accounts 12 in an atomic manner on the distributed ledger 110. The associated token-bound account 12 is securely and immutably bound to the associated non-fungible token 11. The token-bound account 12 provides a digital folder 50 for metadata of the asset. The metadata may comprise in particular documents 21 to be stored on the permissioned storage 20.

According to the embodiment of FIG. 1, the distributed ledger 110 is embodied as a public blockchain 110. The distributed ledger 110 may be in particular embodied as the Ethereum network or any other Ethereum Virtual Machine (EVM) compatible blockchain.

According to embodiments, the smart registry contract 10 may be in particular a contract according to the ERC-6551 standard and the non-fungible token 11 may be a token according to the ERC-721 standard.

According to the embodiment of FIG. 1, the non-fungible token(s) 11, the smart registry contract 10 and the token-bound accounts 12 reside all on the public blockchain 110.

Nevertheless, to maintain privacy, documents 21 of the metadata are stored on the permissioned storage system 20.

The permissioned storage system 20 may be in particular implemented as a permissioned storage network (PSN) providing a dedicated, permissioned storage layer-based on IPFS (InterPlanetary File System) or Arweave (ArFS). The permissioned storage system 20 may be configured to serve as a secure persistence layer for all digitized documents associated with the non-fungible token 11. This secure storage network may store and manage important asset-related documents, such as certificates, contracts, and metadata. The Uniform Resource Identifiers (URIs) to these documents are linked directly to the token-bound account 12 and the non-fungible token 11, in particular to ERC-721 and ERC-6551 tokens, thereby ensuring seamless access to the documents 21 while maintaining the integrity and privacy of the stored data. This permissioned storage network enables a secure, decentralized, and tamper-proof solution for managing the documents 21 associated with the non-fungible token 11 of a real-world asset. According to embodiments, the permissioned storage system 20 is capable of storing documents in any format and of any size. Furthermore, according to embodiments there is no global index of the documents 21 so that they remain private. The documents 21 are only referenced as links 22 in the corresponding token-bound account 12.

The token-bound account 12 and the permissioned storage system 20 may combine the ERC-721, ERC-6551 and ERC2981 Ethereum standards. They may provide a robust and flexible framework for tokenizing documents and linking them to real-world assets. According to a further embodiment, a royalty mechanism may be provided by the smart registry contract 10 which ensures that creators receive royalties from secondary sales.

By leveraging the mentioned Ethereum standards, it can be ensured that each digital folder 50 provided by the token-bound account 12 and the linked documents 21 stored in the permissioned storage system 20 is securely minted on the distributed ledger (EVM-compatible blockchain), benefiting from its proven reliability and security. The application layer 30 may further enhance the functionality and integrity of the digital folder by incorporating fraud prevention mechanisms. This may ensure that once a non-fungible token 11 is listed for sale, the seller cannot alter the state of the non-fungible token 11 including its token-bound account 12, thereby protecting the integrity of the transaction.

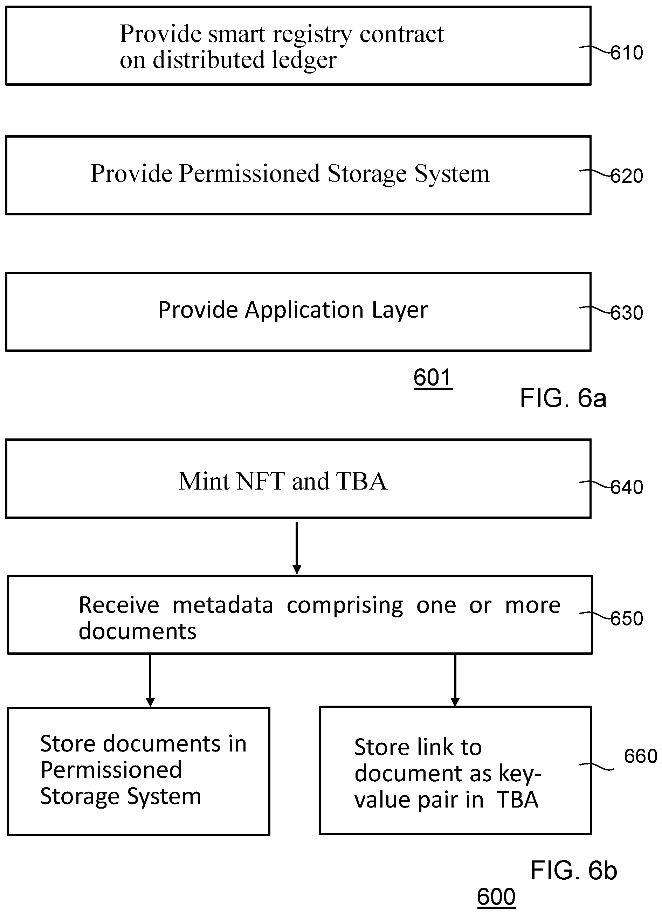

Referring now to FIGS. 6a and 6b, flow charts comprising method steps of a computer-implemented method for managing the ownership of an asset, in particular a physical or a digital asset, are shown. The method may be performed by the digital asset management system 100 as shown in FIG. 1.

FIG. 6a shows initial steps for setting up the digital asset management system. FIG. 6b shows further steps for managing the digital asset on the provided platform.

At step 610, the smart registry contract 10 is provided on the distributed ledger 110.

At step 620, the permissioned storage system 20 is provided.

At step 630, the application layer 30 is provided.

The steps 610-630 comprise initial steps to set up the main infrastructure for the computer-implemented method.

At step 640, a non-fungible token 11 and an associated token-bound account 12 is minted on the distributed ledger 110 by the smart registry contract 10. The minting of the non-fungible token and its associated token-bound account is performed as atomic transaction, i.e. that both operations are indivisible and irreducible such that either both occur, or none occur. The associated token-bound account 12 is securely and immutably bound to the associated non-fungible token 11.

As mentioned, the distributed ledger 110 may support according to embodiments the ERC-6551 standard. This standard comprises a mechanism for managing token-bound accounts, commonly referred to as smart wallets, through an ERC6551Registry smart contract. Within this framework, an ERC6551Account smart contract is extended according to embodiments to act as a template for the non-fungible tokens. When a new token is minted, at step 640, the method involves calling the createAccount function on the EVM-compatible blockchain 110 where the smart registry contract 10 is deployed. This action results in the creation of an extended ERC-721 token on the same blockchain 110 where the smart registry contract 10 resides.

The step 640 may be repeated several times to create a plurality of non-fungible tokens 11 and associated token-bound accounts 12.

After the minting, the token-bound accounts 12 may serve as a digital folder 50 for the metadata of the corresponding non-fungible token 11.

The non-fungible token 11 is not directly tied to the documents 21, but instead functions as the owner of the token-bound account (smart wallet) 12. According to embodiments, the non-fungible token 11 may be embodied as ERC-721 token which also supports the ERC-7710 standard, thereby enabling delegation of transfer operations to the application layer 30. Hence the architecture according to embodiments allows for a flexible and secure management of digital assets across different EVM based chains, leveraging the application layer 30 for enhanced control and functionality.

The storing of metadata may be performed via the application layer 30. More particularly, at step 650, the application layer 30 receives the metadata, e.g. via the user interface 31, from a user. For this the user has to authenticate herself to the application layer 30. The metadata may comprise small pieces of information which may be stored as key-value pairs 25 comprising a key KN and a corresponding value VN in the token-bound account 12. A document 21 may be stored via the application layer 30 and the machine-to-machine interface 34 in the permissioned storage system 20. Concurrently, a link 22 to the document 21 is recorded in the associated token-bound account 12. The link 22 may be stored in particular as value VN of a corresponding key-value pair KN-VN.

According to embodiments, the smart registry contract 10 is configured to prevent external calls to the execute-function of the ERC-6551 standard for security reasons. Hence execute calls must originate from internal smart contract-defined functions only.

According to embodiments, the smart registry contract 10 provides the following functions permissioned only to the owner of the non-fungible token 11:
an add-function to add metadata of the asset to the token-bound account, more particularly:
*addMetadata(string key, string value).*

This function records string based metadata as key-value pairs in the token-bound account 12. In the case of documents 21, the value will be the URI of the document stored on the permissioned storage system 20. This function will throw an error if the key already exists.
an update-function to update metadata of the token-bound account, more particularly;
*updateMetadata (string key, string value).*

This function updates the value corresponding to the provided key in the token-bound account. This function will throw an error if the key does not exist.
a remove-function to remove metadata of the token-bound account, more particularly:
   *removeMetadata(string key).* This function removes a metadata key-value pair.
an approve-read function to grant read rights to read a selection of metadata from the token-bound account and the permissioned storage system, more particularly:
   *readMetadata(string key):* This function reads a single metadata item from the token-bound account.
   *readAllMetadata():* This function reads all metadata from the token-bound account.
an approve-lock function configured to lock the token-bound account 12 and to prevent any changes to the metadata of the token-bound account 12, more particularly:
   *approveLock():* This function locks the token-bound account, thereby preventing further changes to the metadata and the associated non-fungible token. Locking the token-bound account is an efficient fraud prevention mechanism, as it prevents changes to the contents while a sale is in progress. More particularly, this function enables a lockable state for the digital folder of a non-fungible token, meaning that once a document or contract is locked, no further modifications can be made. This feature can ensure that agreements are preserved in their original form once finalized, maintaining the integrity and trustworthiness of the document until a transaction takes place.
a transfer function configured to transfer the ownership of the non-fungible token and to unlock the locked-token-bound account, more particularly:
   *transferUnlock():* This function transfers the ownership of the non-fungible token and unlocks the token-bound account, allowing changes to the metadata or the associated non-fungible token.
a plurality of signing functions for signing documents, more particularly:
   *signDocument(string[] keys, string walletAddress).* This function signs document(s) based on the metadata identifier through a key-value pair.
an approve signer function configured to allow a third party account to sign document(s) on behalf of the owner, more particularly:
   *approveSigner(string ownerAddress, string signerAddress, string[] keys) -*
   a revoke signer function configured to revoke the approved signer function, more particularly:
      *revokesigner(string signerAddress, string[] keys).* This function removes access to a specific user as a signer for all future interactions.

The plurality of signing functions provide an advanced solution for document signing and recording. In particular it offers granular control over signing documents from multiple parties. This mechanism allows each user to use their private key to sign documents, ensuring that only authorized individuals can participate in the signing process, thereby enhancing security and authenticity.

Moreover, the plurality of signing functions allows users to delegate signing rights to others, enabling specific individuals or institutions to sign on behalf of an individual, group, or organization. Once all necessary signatures are gathered, the corresponding document may be recorded on the permissioned storage system 20 and the token-bound account 12.
a read delegation function configured to delegate rights to read a selection of metadata of a token-bound account, more particularly:
   *approveRead(uint256 walletAddress, string[] keys, boolean listOnly).* This function delegates rights to read a selection of metadata from the token-bound account to another user. This function allows the buyer during a delivery versus payment process to view the metadata and documents before purchasing the non-fungible token. The listOnly option is provided for sensitive data that the owner wants to confirm exists in the token-bound account without sharing it with a potential buyer. This allows the owner to be selective about the exact data shared with the buyer before a purchase but be as transparent as possible.
a revoke read delegation function configured to revoke delegated rights to read a selection of metadata of a token-bound account, more particularly:
   *revokeRead(uint256 walletAddress, string[] keys).* This function revokes read access to a selection of metadata from the token-bound account for a particular wallet.
a delegate-transfer function configured to delegate transfer of ownership rights to the application layer.

This enables the application layer to transfer the non-fungible token 11 and its token-bound account 12 on behalf of the current owner (seller) without requiring any further interaction from the seller. If the non-fungible token 11 is implemented as an ERC-721 token, a custom delegate function may be used. ERC-7710 proposes a standardized framework for smart contracts to delegate capabilities to other contracts or externally owned accounts.

In this embodiment, the custom implementation of the delegate function extends the core principles of ERC-7710 to suit specific application needs. The smart registry contract 10 serves as a delegation manager, responsible for validating delegation authority and invoking the delegator (the respective owner of the non-fungible token 11) to execute an action. This registry contract may adhere to the ER7710Manager interface while incorporating tailored functionality within the delegate process to ensure seamless and secure delegation.

The connection between a real-world asset and its corresponding non-fungible token 11 and the token-bound account 12 may be established through a comprehensive process of tokenizing the asset's metadata. This may involve creating multiple interconnected data points between the physical and digital asset, with the principle that the more data points are established, the stronger and more reliable the connection becomes. These data points ensure that the non-fungible token accurately and comprehensively represents the real-world asset, providing a robust link that is essential for maintaining the integrity and authenticity of the asset.

According to embodiments, the tokenization of the asset's primary metadata is facilitated by the smart registry contract 10 which may be in particular implemented as an extended ERC-6551 contract. This smart registry contract 10 is designed to accommodate a wide range of real-world assets, ensuring that each tokenized asset is uniquely identifiable on the distributed ledger 110. The main metadata that is tokenized may include in particular critical attributes such as images of the asset, asset name, creator or manufacturer name, production or acquisition year, and further details that define the asset and are crucial for identification and valuation.

Beyond these core elements, the smart registry contract 10 and the non-fungible token 11 are built to be flexible and extensible, allowing additional metadata to be incorporated depending on the specific nature of the real-world asset. This can include dimensions, specifications, usage history, provenance, and any other relevant information. By encoding these details within the non-fungible token, the digital folder provides a comprehensive digital representation of the real-world asset that can be used for purposes such as authentication, insurance, compliance, and resale.

Moreover, this tokenized metadata can be seamlessly integrated with a set of documents 21 stored in the permissioned storage system 20, including certificates of authenticity, condition reports, user manuals, contracts, and other relevant records. By embedding these documents 21 into the permissioned storage system 20 and linking them via the links 22 to the tokenized metadata of the token-bound account 12, the connection between the asset and the non-fungible-token 11 is further strengthened. Furthermore, such an embodiment provides a secure and atomic method for managing and transferring ownership and all related digital assets.

Hence when a real-world asset is tokenized by means of the method according to embodiments of the invention, the non-fungible-token 11 and its digital folder transforms the real-word asset into a comprehensive digital asset that encapsulates all relevant information and documentation. This can ensure that the real-world asset's identity and value are preserved and enhanced through its digital counterpart, namely the non-fungible token 11 and its token-bound account 12, thereby offering a powerful and reliable tool for managing a wide range of real-world assets in the digital age.

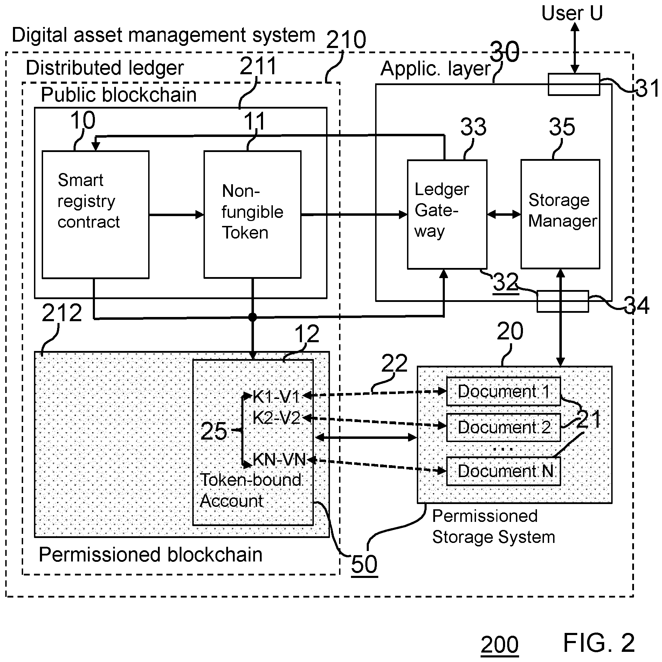

FIG. 2 shows a digital asset management system 200 according to an embodiment of the invention. The digital asset management system 200 corresponds partly to the digital asset management system 100. Similar or like parts are denoted with the same reference numerals.

Accordingly, the digital asset management system 200 comprises a permissioned storage system 20 and an application layer 30 with user interface 31 and a machine-to-machine interface 32 and a storage manager 35. The digital asset management system 200 comprises a distributed ledger 210 which encompasses two parts, namely a public blockchain 211 and a permissioned blockchain 212. The non-fungible token 11 is according to this embodiment minted on the public blockchain 211, while the token-bound account 11 is minted on the permissioned blockchain 212. The public blockchain 211 provides advantages for token creation, while the permissioned blockchain 212 provides advantages in terms of security, privacy and advanced digital portfolio management capabilities.

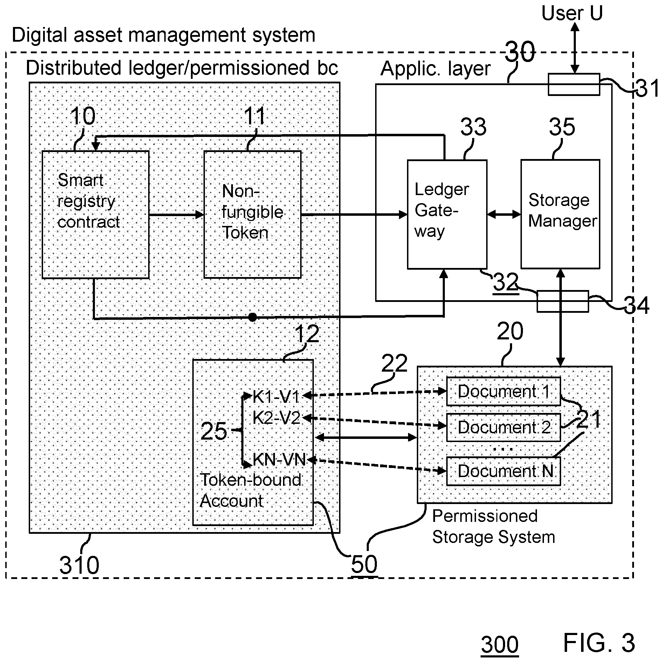

FIG. 3 shows a digital asset management system 300 according to an embodiment of the invention. The digital asset management system 300 corresponds partly to the digital asset management system 100 of FIG. 1 and the digital asset management system 200 of FIG. 2 . Like parts are denoted with the same reference numerals.

Accordingly, the digital asset management system 300 comprises a permissioned storage system 20 and an application layer 30 with a user interface 31 and a machine-to-machine interface 32 and a storage manager 35. The digital asset management system 300 comprises a distributed ledger 310 which is implemented as permissioned blockchain. The non-fungible token 11 and the token-bound account 12 are both minted on the permissioned blockchain 310. Hence all asset-related processes, including the minting of the non-fungible token 11 and the associated token-bound account 12 as well as the storage of documents 21 can be performed within a secure ecosystem provided by the permissioned blockchain 310 and the permissioned storage system 20.

According to such an embodiment, the management of the assets takes place within a permissioned blockchain providing a secure and controlled environment. Unlike public ledgers, a permissioned blockchain may offer enhanced privacy, tighter governance, and higher operational efficiency, as only authorized participants can access and interact with the blockchain. This may particularly ensure that sensitive information remains confidential and protected from unauthorized access. Additionally, the permissioned blockchain 310 may reduce the risk of network congestion and excessive transaction fees, ensuring smoother and more reliable operations. According to such an embodiment all asset-related processes, including token minting, digital folder creation, and document storage may be conducted within this secure ecosystem. The integration of ERC-6551 token-bound accounts (smart wallets) in such a permissioned environment allows for seamless and cohesive management of assets. Documents 21 and associated metadata are safely stored in the permissioned storage system 20. This may ensure that the entire digital asset lifecycle is handled with very high security, privacy, and operational control. Such an embodiment provides users with the full benefits of blockchain technology while maintaining a high standard of data protection and efficiency.

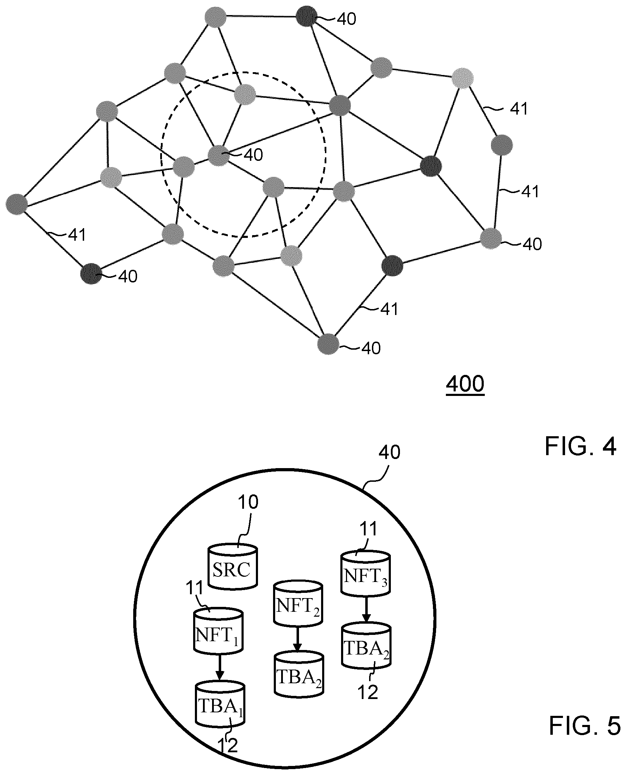

FIG. 4 shows an exemplary block diagram of a distributed ledger 400 according to an embodiment of the invention.

The distributed ledger 400 may be in particular an implementation of the distributed ledger 110 or the distributed ledger 310. It comprises a plurality of nodes 40, which may also be denoted as network nodes 40 or computing nodes 40. The nodes 40 may communicate with each other via communication links 41. Each of the plurality of nodes 40 is configured to run one or more smart contracts. According to embodiments, a smart contract shall be understood as a piece of software that is running on the respective node.

FIG. 5 illustrates in a more detailed way smart contracts running on nodes 40 of the distributed ledger 400.

The smart contracts may serve different functions and may be of different types. The smart contracts encompass the smart registry contract 10, also denoted as SRC, as well as a plurality of non-fungible tokens 11, also denoted as NFT₁, NFT₂, and NFT₃. The plurality of non-fungible tokens NFT₁, NFT₂ and NFT₃ are securely bound to token-bound accounts TBA₁, TBA₂ and TBA₃ respectively.

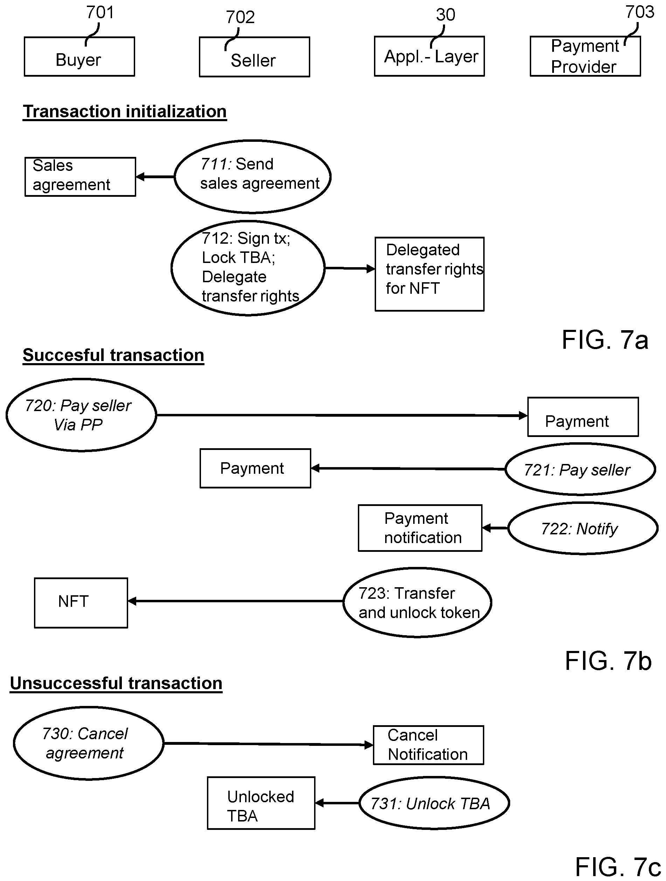

FIG. 7 shows a flow chart of method steps of a computer-implemented method for ownership transfer of the current owner of the non-fungible token to a buyer of the non-fungible token. More particularly, the illustrated ownership transfer as illustrated in FIG. 7 is embodied as a delivery versus payment process. Delivery versus payment (DVP) is a securities industry settlement method that guarantees the transfer of securities only happens after payment has been made. DVP stipulates that the buyer's payment for securities must be made prior to or at the same time as the delivery of the security. Delivery versus payment is the settlement process from the buyer's perspective, while from the seller's perspective, this settlement system is called receive versus payment (RVP).

The parties which are involved in the method are a buyer 701, a seller 702, the application layer 30 of e.g. the digital asset management system 100 as shown in FIG. 1 and an external payment provider 703. Other embodiments may use the digital asset management system 200 or 300 as shown in FIGS. 2 and 3.

Coordinating the sale of the asset and transfer of the associated metadata and documentation encompasses both an interaction with the application layer 30 and the smart registry contract 10 in order to ensure the consistency of the digital folder before the asset is transferred.

At first, an initialization of a transaction is described:
At step 711, the seller 702 sends a sales agreement to the buyer 701. The sales agreement gives the buyer an option to purchase an asset and transfer the non-fungible token 11 and the associated digital folder 50 of the token-bound account 12 to the buyer 701.
At step 712, the seller 702 signs a sales transaction on-chain. The signed sales transaction comprises a call to the *approveLock* function provided by the smart registry contract 10. This locks the token-b ound account 12 and prevents any changes to the metadata of the digital folder 50 provided by the token-bound account 12.

The signed sales transaction further comprises a delegation of transfer rights from the non-fungible token owner to the application layer 30. The delegation of transfer rights may be implemented by a delegate-transfer function of the underlying protocol of the non-fungible token 11. For embodiments according to which the non-fungible token 11 is implemented as ERC-721 token, an implementation of the ERC-7710 delegation protocol may be used for the delegation. Such delegation allows the application layer 30 to automatically transfer the non-fungible token 11 and the associated token-bound account 12 without any further interaction from the seller 702. As a result, the application layer 30 has delegated transfer rights for the non-fungible token 11. This may provide a preferable user experience optimization.

The buyer 701 may then review the sales agreement and accept the sales agreement on the application layer 30. This may then trigger the payment process (on or off-chain).

In case of a successful transaction, the buyer 701 pays the seller, at a step 720, by transferring the respective amount to the external payment provider 703. The external payment provider 703 pays then the seller, at step 721, and informs the application layer 30, at a step 722, about the payment. Then, at step 723, the application layer 30 transfers the ownership of the non-fungible token 11 and the associated token-bound account 12 to the buyer 701. Concurrently, it unlocks the token-bound account 12 by calling the *transferUnlock()* function provided by the smart registry contract 10, thereby completing the transaction. This allows then the buyer 701 to make changes to the metadata of the non-fungible token 11.

In case of an unsuccessful transaction, i.e. if the buyer 701, at a step 730, rejects the agreement, fails to make a payment or lets a predefined payment window lapse, the application layer 30 receives a corresponding cancel notification. The application layer 30 then revokes, at step 731, the delegated transfer rights and concurrently unlocks the token-bound account 12. This allows the seller to initiate another sales transaction.

Generally, the owner of the non-fungible token 11 is the only user who has access to the contents of the token-bound account 12 and the linked documents 21 in the permissioned storage system 20. But during the process of selling a non-fungible token 11 as explained above, perspective buyers 701 may want to have visibility of the contents of the token-bound account 12 in order to verify the legitimacy of the non-fungible token 11 as well as ensure that all of the expected documents 21 and metadata is provided.

In order to facilitate such visibility, the application layer 30 provides APIs for providing users visibility of the contents of the token-bound accounts 12. The corresponding read functions can only be authorized by the owner of the non-fungible token 11. Conversely, the owner can also authorize revoking these rights. The application layer 30 is configured to coordinate the management of sharing contents of the token-bound accounts with buyers as well as presenting the contents in a format the buyer can easily digest.

For an ownership transfer of an asset, the digital asset management system 100 uses 'locked' versions of a respective sales agreement which prevent any editing operations, i.e. the only way to manage these operations is via the aforementioned API.

This ensures the data integrity of the token-bound account, i.e. the metadata in the token-bound account remains the same from the time a sales agreement is issued to a buyer until the transfer of ownership has been completed.

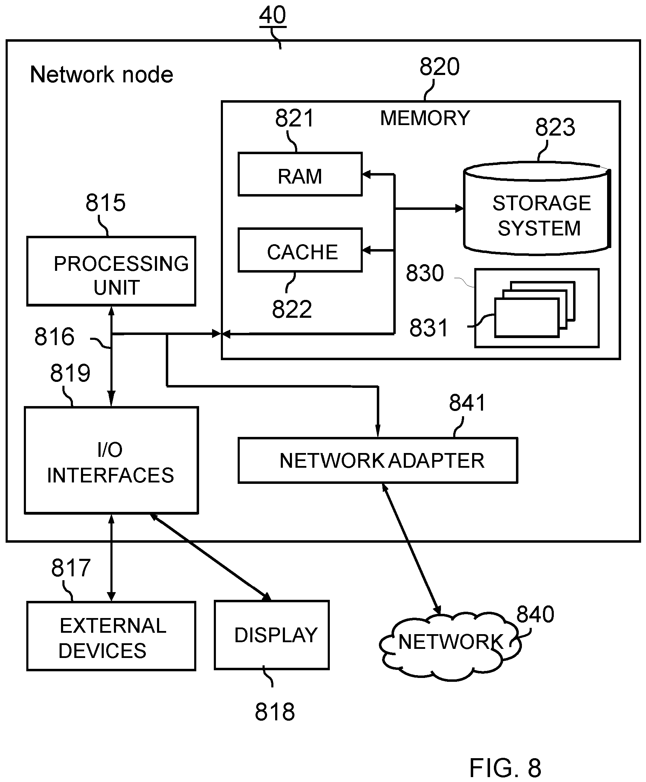

Referring now to Fig. 8, a more detailed block diagram of a network node 40 according to embodiments of the invention is shown. The network node 40 establishes a computing node that may perform computing functions and may hence be generally embodied as a computing system or computer. The network node 40 may be e.g. a server computer. The network node 40 may be configured to perform one or more steps of a computer-implemented method for managing the ownership of assets. The network node 40 may be operational with numerous other general purpose or special purpose computing system environments or configurations.

The network node 40 may be described in the general context of computer system-executable instructions, such as program modules, being executed by a computer system. Generally, program modules may include routines, programs, objects, components, logic, data structures, and so on that perform particular tasks or implement particular abstract data types. The network node 40 is shown in the form of a general-purpose computing device. The components of network node 40 may include, but are not limited to, one or more processors or processing units 815, a system memory 820, and a bus 816 that couples various system components including system memory 820 to processor 815.

Bus 816 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Network node 40 typically includes a variety of computer system readable media. Such media may be any available media that is accessible by network node 40, and it includes both volatile and non-volatile media, removable and non-removable media.

System memory 820 can include computer system readable media in the form of volatile memory, such as random access memory (RAM) 821 and/or cache memory 822. Network node 810 may further include other removable/non-removable, volatile/non-volatile computer system storage media. By way of example only, storage system 823 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 816 by one or more data media interfaces. As will be further depicted and described below, memory 820 may include at least one computer program product having a set (e.g., at least one) of program modules that are configured to carry out the functions of embodiments of the invention.

Program/utility 830, having a set (at least one) of program modules 831, may be stored in memory 820 by way of example, and not limitation, as well as an operating system, one or more application programs, other program modules, and program data. Each of the operating system, one or more application programs, other program modules, and program data or some combination thereof, may include an implementation of a networking environment. Program modules 831 generally carry out the functions and/or methodologies of embodiments of the invention as described herein. Program modules 831 may carry out in particular one or more steps of a computer-implemented method, e.g. of one or more steps of the methods as described above.

Network node 40 may also communicate with one or more external devices 817 such as a keyboard or a pointing device as well as a display 818. Such communication can occur via Input/Output (I/O) interfaces 819. Still yet, network node 40 can communicate with one or more networks 40 such as a local area network (LAN), a general wide area network (WAN), and/or a public network (e.g., the Internet) via network adapter 841. According to embodiments the network 840 may be in particular a distributed network comprising a plurality of network nodes 40, e.g. the network 400 as shown in FIG. 4. As depicted, network adapter 841 communicates with the other components of network node 40 via bus 816. It should be understood that although not shown, other hardware and/or software components could be used in conjunction with network node 40.

The network node 40 provides network resources for the corresponding distributed network. The network resources include in particular the processing unit 815 and the memory 820 including the storage system 823.

Aspects of the present invention may be embodied as a system, in particular a distributed network, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including, but not limited to, imperative, object oriented, functional or multi-paradigm programming languages such as Java, Kotlin, Typescript, Javascript, Solidity or the like, and conventional procedural programming languages, such as the "C" programming language or similar programming languages.

Aspects of the present invention are described herein with reference to flowchart illustrations and/or block diagrams of methods, networks, apparatus (systems), and computer program products according to embodiments of the invention.

Computer readable program instructions according to embodiments of the invention may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of networks, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

While there are shown and described presently preferred embodiments of the invention, it is to be distinctly understood that the invention is not limited thereto but may be otherwise variously embodied and practiced within the scope of the following claims.

### Reference numerals:

- 10: Smart registry contract (SRC)
- 11: Non-fungible token (NFT)
- 12: Token-bound account (TBA)
- 20: Permissioned storage system
- 21: Documents
- 22: Links
- 25: Key-value pairs
- 30: Application layer
- 31: User interface
- 32: Machine-to machine interface
- 33: Ledger-Gateway
- 34: Storage-Interface
- 35: Storage manager
- 40: Nodes
- 41: Communication links between nodes
- 50: Digital folder
- 100, 200, 300: Digital asset management system
- 110: Distributed ledger, public blockchain
- 210: Distributed ledger
- 211: Public blockchain
- 212: Permissioned blockchain
- 310: Distributed ledger, permissioned blockchain
- 400: Distributed network
- 701: Buyer
- 702: Seller
- 703: Payment provider

## Claims

1. A computer-implemented method for managing the ownership of an asset, in particular a physical or a digital asset, the method comprising
providing a smart registry contract (10) on a distributed ledger (110, 210, 310), the smart registry contract being configured to provide a minting functionality;
minting, by the smart registry contract (10), a non-fungible token (11) as ownership token for the asset and an associated token-bound account (12) on the distributed ledger (110, 210, 310), the associated token-bound account (12) being securely and immutably bound to the associated non-fungible token (11) and being configured to provide a digital folder (50)for metadata of the asset;
providing a permissioned storage system (20); providing an application layer (30) comprising a user interface (31) and a machine-to-machine interface (32, 33, 34) to the smart registry contract (10) of the distributed ledger (110, 210, 310) and the permissioned storage system (20);
receiving, by the application layer, the metadata of the asset, the metadata encompassing a document (21) associated to the asset;
storing, via the application layer (30), the document (21) in the permissioned storage system (20); and
recording, via the application layer (30) and the smart registry contract (10), a link (22) to the document (21) in the associated token-bound account (12) .

2. A computer-implemented method according to claim 1, further comprising recording a plurality of key-value pairs (25) of the metadata in the token-bound account.

3. A computer-implemented method according to claim 2, further comprising recording the link (22) to the document as key-value pair (25) comprising the link as value.

4. A computer-implemented method according to any of the preceding claims, wherein the distributed ledger (210) comprises a public blockchain (211) and a permissioned blockchain (212), the method comprising
minting the non-fungible token on the public blockchain; and
minting the token-bound account on the permissioned blockchain.

5. A computer-implemented method according to any of the preceding claims 1 to 3, wherein the distributed ledger comprises a permissioned blockchain (310), the method comprising
minting the non-fungible token and minting the associated token-bound account on the permissioned blockchain.

6. A computer-implemented method according to any of the preceding claims 1-3, wherein the distributed ledger comprises a public blockchain (110), the method comprising
minting the non-fungible token and minting the associated token-bound account on the public blockchain.

7. A computer-implemented method according to any of the preceding claims, wherein the smart registry contract (10) is configured to provide
an add-function to add metadata of the asset to the token-bound account;
an update-function to update metadata of the token-bound account; and
a remove-function to remove metadata of the token-bound account,
wherein the add-function, the update function and the remove-function are permissioned only to the owner of the non-fungible token.

8. A computer-implemented method according to any of the preceding claims, wherein the smart registry contract (10) is configured to provide
an approve-read function to grant read rights to read a selection of metadata from the token-bound account and the permissioned storage system; and
a revoke-read function to revoke granted read rights.

9. A computer-implemented method according to any of the preceding claims, wherein the smart registry contract (10) is configured to provide
an approve-lock function configured to lock the token-bound account and to prevent any changes to the metadata of the token-bound account;
a transfer function configured to transfer the ownership of the non-fungible token and to unlock the locked-token-bound account.

10. A computer-implemented method according to any of the preceding claims, wherein the smart registry contract (10) is configured to provide
a delegate-transfer function configured to delegate transfer of ownership rights to the application layer (30).

11. A computer-implemented method according to any of the preceding claims, wherein
the smart registry contract (10) is a contract according to the ERC 6551 standard; and
the non-fungible token (11) is a token according to the ERC-721-standard.

12. A computer-implemented method according to claim 11, wherein the smart registry contract (10) is configured to prevent external calls to the execute-function of the ERC-6551 standard.

13. A computer-implemented method according to any of the preceding claims, wherein the permissioned storage system (20) is implemented as InterPlanetaryFileSystem (IPFS) or Arweave (ArFS).

14. A computer-implemented method according to any of the preceding claims, wherein an ownership transfer of the current owner of the non-fungible token (11) to a buyer (701)of the non-fungible token comprises
receiving, by the smart registry contract (10), a signed sales transaction of the owner of the non-fungible token (11), the signed sales transaction comprising a call of the approve-lock function, thereby locking the token-bound account (12)and preventing any changes to the metadata of the token-bound account;
delegating, by the smart registry contract (10), transfer rights of the non-fungible token (11) to the application layer (30);
receiving, by the application layer (30), a payment confirmation of the sales transaction from a payment provider (703);
transferring, by the application layer (30), the ownership of the non-fungible token (11)to the buyer (701); and
unlocking, by the application layer (30), the token-bound account (12)and re-allowing changes to the metadata of the token-bound account.

15. A computer-implemented method according to any of the preceding claims, wherein the metadata comprise certificates of authenticity, ownership records, contracts and/or further documents.

16. A digital asset management system (100, 200, 300) comprising a distributed ledger (110, 210, 310), a permissioned storage system (20) and an application layer (30), the application layer (30) being configured to provide a user interface (31) and a machine-to-machine interface (32, 33, 34) to the distributed ledger and the permissioned storage system, wherein the digital asset management system (100, 200, 300) is configured to perform a computer-implemented method for managing the ownership of an asset, in particular a physical or a digital asset, the method comprising
providing a smart registry contract (10) on the distributed ledger, the smart registry contract being configured to provide a minting functionality;
minting, by the smart registry contract, a non-fungible token (11) as ownership token for the asset and an associated token-bound account (12) on the distributed ledger, the associated token-bound account (12) being securely and immutably bound to the associated non-fungible token (11) and being configured to provide a digital folder (50)for metadata of the asset;
receiving, by the application layer (30), metadata of the asset, the metadata encompassing a document (21) associated to the asset;
storing, via the application layer (30), the document (21) in the permissioned storage system (20); and
recording, via the application layer (30) and the smart registry contract (10), a corresponding link (22) to the document (21) in the associated token-bound account (12).

17. A computer program product for performing a computer-implemented method for managing the ownership of an asset on a digital asset management system (100, 200, 300), in particular a physical or a digital asset, the digital asset management system (100, 200, 300) comprising a distributed ledger (110, 210, 310), a permissioned storage system (20) and an application layer (30), the application layer being configured to provide a user interface (31) and a machine-to-machine interface (32,33,34) to the distributed ledger and the permissioned storage system, the computer program product comprising a computer readable storage medium having program instructions embodied therewith, the program instructions executable by the digital asset management system to cause the digital asset management system to perform a method comprising
providing a smart registry contract (10) on the distributed ledger (110, 210, 310), the smart registry contract (10) being configured to provide a minting functionality;
minting, by the smart registry contract (10), a non-fungible token (11) as ownership token for the asset and an associated token-bound account (12) on the distributed ledger, the associated token-bound account (12) being securely and immutable bound to the associated non-fungible token and being configured to provide a digital folder (50)for metadata of the asset;
receiving, by the application layer (30), metadata of the asset, the metadata encompassing a document associated to the asset;
storing, via the application layer (30), the document (21) in the permissioned storage system (20); and
recording, via the application layer (30)and the smart registry contract (10), a corresponding link (22) to the document (21) in the associated token-bound account (12).

## Amended claims

### Amended claims in accordance with Rule 137(2) EPC.

1. A computer-implemented method for managing the ownership of an asset, in particular a physical or a digital asset, the method comprising
providing a smart registry contract (10) on a distributed ledger (110, 210, 310), the smart registry contract being configured to provide a minting functionality;
minting, by the smart registry contract (10), a non-fungible token (11) as ownership token for the asset and an associated token-bound account (12) on the distributed ledger (110, 210, 310), the associated token-bound account (12) being securely and immutably bound to the associated non-fungible token (11) and being configured to provide a digital folder (50)for metadata of the asset;
wherein the smart registry contract (10) is further configured to provide
an add-function to add metadata of the asset to the token-bound account;
an approve-read function to grant read rights to read a selection of metadata from the token-bound account and the permissioned storage system; and
a revoke-read function to revoke granted read rights;
wherein the add-function, the approve-read function and the revoke-read function are permissioned only to the owner of the non-fungible token; the method further comprising
providing a permissioned storage system (20);
providing an application layer (30) comprising
a user interface (31) configured to authenticate a user and to receive a document for the digital folder from the authenticated user;
a machine-to-machine interface (32, 33) to the smart registry contract (10) of the distributed ledger (110, 210, 310);
and a machine-to-machine interface (32, 34) to the permissioned storage system (20);
receiving, by the user interface of the application layer, the metadata of the asset from the authenticated user, the metadata encompassing the document (21) associated to the asset;
storing, via the machine-to-machine interface (32, 34) of the application layer (30) to the permissioned storage system (20), the document (21) in the permissioned storage system (20); and
recording, by the add-functionality of the smart registry contract, via the machine-to-machine interface (32, 33) to the smart registry contract (10) of the application layer (30), a link (22) to the document (21) in the associated token-bound account (12).

2. A computer-implemented method according to claim 1, further comprising recording a plurality of key-value pairs (25) of the metadata in the token-bound account.

3. A computer-implemented method according to claim 2, further comprising recording the link (22) to the document as key-value pair (25) comprising the link as value.

4. A computer-implemented method according to any of the preceding claims, wherein the distributed ledger (210) comprises a public blockchain (211) and a permissioned blockchain (212), the method comprising
minting the non-fungible token on the public blockchain; and
minting the token-bound account on the permissioned blockchain.

5. A computer-implemented method according to any of the preceding claims 1 to 3, wherein the distributed ledger comprises a permissioned blockchain (310), the method comprising
minting the non-fungible token and minting the associated token-bound account on the permissioned blockchain.

6. A computer-implemented method according to any of the preceding claims 1-3, wherein the distributed ledger comprises a public blockchain (110), the method comprising
minting the non-fungible token and minting the associated token-bound account on the public blockchain.

7. A computer-implemented method according to any of the preceding claims, wherein the smart registry contract (10) is configured to provide
an update-function to update metadata of the token-bound account; and
a remove-function to remove metadata of the token-bound account,
wherein the update function and the remove-function are permissioned only to the owner of the non-fungible token.

8. A computer-implemented method according to any of the preceding claims, wherein the smart registry contract (10) is configured to provide
an approve-lock function configured to lock the token-bound account and to prevent any changes to the metadata of the token-bound account;
a transfer function configured to transfer the ownership of the non-fungible token and to unlock the locked-token-bound account;
wherein the approve-lock function and the transfer function are permissioned only to the owner of the non-fungible token.

9. A computer-implemented method according to any of the preceding claims, wherein the smart registry contract (10) is configured to provide
a delegate-transfer function configured to delegate transfer of ownership rights to the application layer (30); wherein the delegate-transfer function is permissioned only to the owner of the non-fungible token.

10. A computer-implemented method according to any of the preceding claims, wherein
the smart registry contract (10) is a contract according to the ERC 6551 standard; and
the non-fungible token (11) is a token according to the ERC-721-standard.

11. A computer-implemented method according to claim 10, wherein the smart registry contract (10) is configured to prevent external calls to the execute-function of the ERC-6551 standard.

12. A computer-implemented method according to any of the preceding claims, wherein the permissioned storage system (20) is implemented as InterPlanetaryFileSystem (IPFS) or Arweave (ArFS).

13. A computer-implemented method according to any of the preceding claims, wherein an ownership transfer of the current owner of the non-fungible token (11) to a buyer (701)of the non-fungible token comprises
receiving, by the smart registry contract (10), a signed sales transaction of the owner of the non-fungible token (11), the signed sales transaction comprising a call of the approve-lock function, thereby locking the token-bound account (12) and preventing any changes to the metadata of the token-bound account;
delegating, by the smart registry contract (10), transfer rights of the non-fungible token (11) to the application layer (30);
receiving, by the application layer (30), a payment confirmation of the sales transaction from a payment provider (703);
transferring, by the application layer (30), the ownership of the non-fungible token (11)to the buyer (701); and
unlocking, by the application layer (30), the token-bound account (12)and re-allowing changes to the metadata of the token-bound account.

14. A computer-implemented method according to any of the preceding claims, wherein the metadata comprise certificates of authenticity, ownership records, contracts and/or further documents.

15. A digital asset management system (100, 200, 300) comprising a distributed ledger (110, 210, 310), a permissioned storage system (20) and an application layer (30), the application layer (30) being configured to provide
a user interface (31) configured to receive a document for a digital folder from a user and to authenticate the user;
a machine-to-machine interface (32, 33) to the distributed ledger; and
a machine-to-machine interface (32, 34) to the permissioned storage system,
wherein the digital asset management system (100, 200, 300) is configured to perform a computer-implemented method for managing the ownership of an asset, in particular a physical or a digital asset, the method comprising
providing a smart registry contract (10) on the distributed ledger, the smart registry contract being configured to provide a minting functionality;
minting, by the smart registry contract, a non-fungible token (11) as ownership token for the asset and an associated token-bound account (12) on the distributed ledger, the associated token-bound account (12) being securely and immutably bound to the associated non-fungible token (11) and being configured to provide a digital folder (50)for metadata of the asset; wherein the smart registry contract (10) is further configured to provide
an add-function to add metadata of the asset to the token-bound account;
an approve-read function to grant read rights to read a selection of metadata from the token-bound account and the permissioned storage system; and
a revoke-read function to revoke granted read rights;
wherein the add-function, the approve-read function and the revoke-read function are permissioned only to the owner of the non-fungible token; the method further comprising
receiving, by the user interface of the application layer (30), metadata of the asset from the authenticated user, the metadata encompassing the document (21) associated to the asset;
storing, via the machine-to-machine interface (32, 34) of the application layer (30), the document (21) in the permissioned storage system (20); and
recording, by the add-functionality of the smart registry contract, via the machine-to-machine interface (32, 33) to the smart registry contract (10) of the application layer (30), a corresponding link (22) to the document (21) in the associated token-bound account (12).

16. A computer program product for performing a computer-implemented method for managing the ownership of an asset on a digital asset management system (100, 200, 300), in particular a physical or a digital asset, the digital asset management system (100, 200, 300) comprising a distributed ledger (110, 210, 310), a permissioned storage system (20) and an application layer (30), the application layer being configured to provide
a user interface (31) configured to receive a document for a digital folder from a user to and to authenticate the user;
a machine-to-machine interface (32,33) to the distributed ledger
a machine-to-machine interface (32,34) to the permissioned storage system, and
the computer program product comprising a computer readable storage medium having program instructions embodied therewith, the program instructions executable by the digital asset management system to cause the digital asset management system to perform a method comprising
providing a smart registry contract (10) on the distributed ledger (110, 210, 310), the smart registry contract (10) being configured to provide a minting functionality;
minting, by the smart registry contract (10), a non-fungible token (11) as ownership token for the asset and an associated token-bound account (12) on the distributed ledger, the associated token-bound account (12) being securely and immutable bound to the associated non-fungible token and being configured to provide a digital folder (50)for metadata of the asset;
wherein the smart registry contract (10) is further configured to provide
an add-function to add metadata of the asset to the token-bound account;
an approve-read function to grant read rights to read a selection of metadata from the token-bound account and the permissioned storage system; and
a revoke-read function to revoke granted read rights;
wherein the add-function, the approve-read function and the revoke-read function are permissioned only to the owner of the non-fungible token; the method further comprising
receiving, by the user interface of the application layer (30), metadata of the asset from the authenticated user, the metadata encompassing a document associated to the asset;
storing, via the machine-to-machine interface (32, 34) of the application layer (30), the document (21) in the permissioned storage system (20); and
recording, by the add-functionality of the smart registry contract, via the machine-to-machine interface (32, 34) of the application layer(30) to the smart registry contract (10), a corresponding link (22) to the document (21) in the associated token-bound account (12).
